(19) Europäisches Patentamt
European Patent Office
Office européen des brevets

(11) Veröffentlichungsnummer: **0 051 785**
**B1**

(12) # EUROPÄISCHE PATENTSCHRIFT

(45) Veröffentlichungstag der Patentschrift: **19.12.84**

(51) Int. Cl.³: **D 21 H 1/46**// C09B43/10, C09B45/48, C09B45/28

(21) Anmeldenummer: **81108891.3**

(22) Anmeldetag: **24.10.81**

(54) **Verwendung von Kupferkomplex-Azofarbstoffen zum Färben von Papier.**

(30) Priorität: **08.11.80 DE 3042147**

(43) Veröffentlichungstag der Anmeldung: **19.05.82 Patentblatt 82/20**

(45) Bekanntmachung des Hinweises auf die Patenterteilung: **19.12.84 Patentblatt 84/51**

(84) Benannte Vertragsstaaten: **CH DE FR GB IT LI**

(56) Entgegenhaltungen:
**EP-A- 0 043 792**
**CH-A- 423 042**
**DE-A- 2 651 369**
**FR-A- 2 438 673**
**Die Akte enthält technische Angaben, die nach dem Eingang der Anmeldung eingereicht wurden und die nicht in dieser Patentschrift enthalten sind.**

(73) Patentinhaber: **BAYER AG**
**Konzernverwaltung RP Patentabteilung**
**D-5090 Leverkusen 1 Bayerwerk (DE)**

(72) Erfinder: **Nickel, Horst, Dr.**
**Fontanestrasse 23**
**D-5090 Leverkusen 1 (DE)**
Erfinder: **Wild, Peter, Dr.**
**Hainstrasse 7**
**D-6305 Alten Buseck (DE)**

**EP 0 051 785 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung ist die Verwendung von Kupferkomplex-Azofarbstoffen der Formel (I)

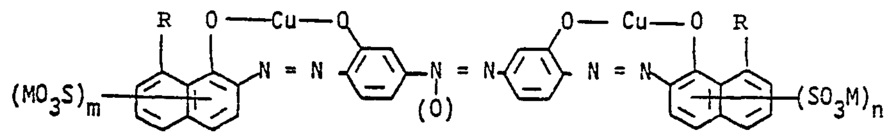

worin
R = gegebenenfalls substituiertes Alkoxy,
M = Wasserstoff oder ein Kation,
m, n = 1 oder 2 bedeuten,
von Kupferkomplex-Azofarbstoffen der Formel (II)

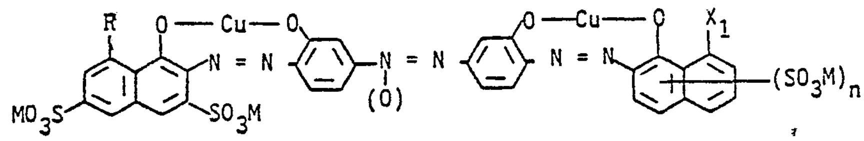

worin
R = gegebenenfalls substituiertes Alkoxy, insbesondere gegebenenfalls substituiertes $C_1$-$C_4$-Alkoxy und
$X_1$ = Hydroxy, Wasserstoff, gegebenenfalls substituiertes Alkoxy,
M = Wasserstoff oder ein Kation
n = 1 oder 2 bedeuten,
und insbesondere solche der Formel (III)

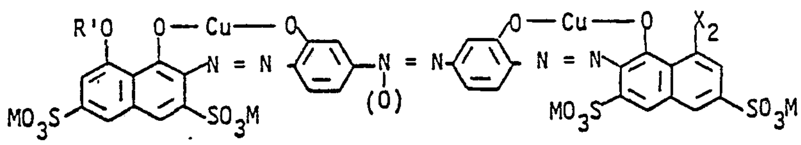

worin
R' = gegebenenfalls substituiertes $C_1$-$C_4$-Alkyl
$X_2$ = Hydroxy oder gegebenenfalls substituiertes Alkoxy
M = Wasserstoff oder ein Kation bedeuten,
zum Färben von Papier, sowie mit diesen Farbstoffen gefärbtes Papier.

Gegenstand der Erfindung ist weiterhin die Verwendung von Farbstoffen der Formel (IV)

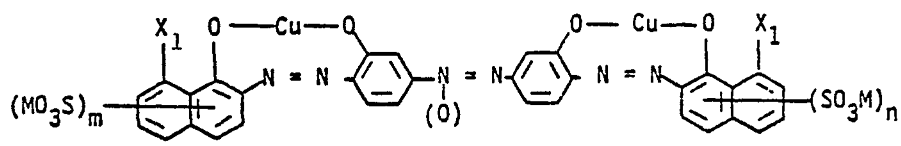

worin
$X_1$ = unabhängig voneinander Wasserstoff, Hydroxy, gegebenenfalls substituiertes Alkoxy,
M = Wasserstoff oder Kation,
m, n = 1 oder 2 bedeuten,
zum Färben von Papier, insbesondere die Verwendung von Farbstoffen der Formel (V)

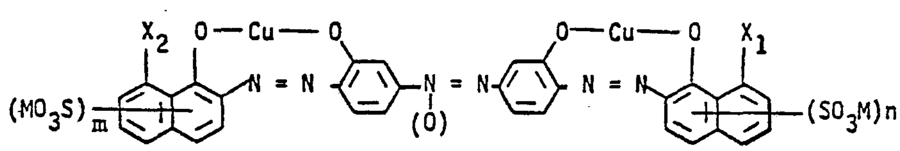

worin
$X_2$ = Hydroxy oder gegebenenfalls substituiertes Alkoxy bedeutet und
$X_1$, M, m und n die in Formel (IV) angegebene Bedeutung haben,
die Verwendung von Farbstoffen der Formel (VI)

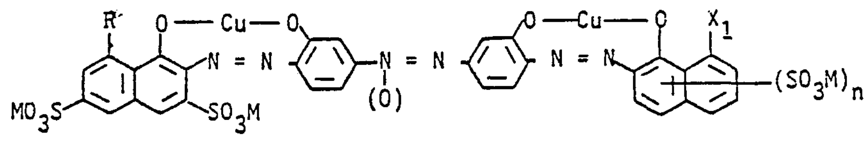

worin
R = gegebenenfalls substituiertes Alkoxy bedeutet und
$X_1$, M und n die in Formel (IV) angegebene Bedeutung haben,
und die Verwendung von Farbstoffen der Formel (VII)

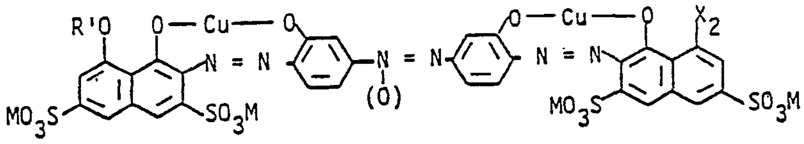

worin
R' = gegebenenfalls substituiertes $C_1$-$C_4$-Alkyl bedeutet und
$X_2$ und M die Formel (V) angegebene Bedeutung haben,
zum Färben von Papier, sowie mit den Farbstoffen der Formeln (IV)-(VII) gefärbtes Papier.

Geeignete Kationen sind beispielsweise Alkalimetallkationen wie Li, Na, K sowie $HN(R_1)_3$-Kationen mit $R_1$ = H oder gegebenenfalls substituiertem $C_1$-$C_4$-Alkyl, insbesondere Hydroxy-substituiertes Alkyl wie Hydroxy-ethyl.

Die Alkyl- und Alkoxygruppen können weiter substituiert sein — insbesondere durch OH — und enthalten vorzugsweise 1-4 C-Atome.

Die Herstellung der Farbstoffe erfolgt beispielsweise durch Zusammenreduktion von Nitroazo-Kupferkomplexverbindungen der Formel

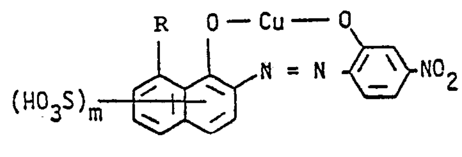

(A)

mit Nitroazo-Kupferkomplexverbindungen der Formel

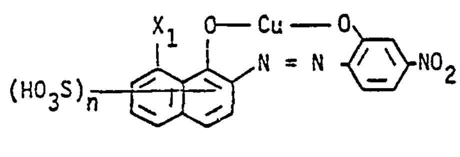

(B)

bzw. von (A) oder (B) allein in bekannter Weise, wie es beispielsweise in Houben-Weyl, Band X/3, Seite 346-349, Verlag Georg Thieme Stuttgart (1965) beschrieben ist.

Die Zusammenreduktion verschiedener Nitroazoverbindungen A und B führt naturgemäß zu Farbstoff-Gemischen, deren Zusammensetzung variiert werden kann durch den Mengen-Einsatz (Mol : Mol bzw. andere Molverhältnisse 1 Mol A bis 0,5 Mol B), um zu dem gewünschten Farbstoffpräparat zu gelangen, wobei vorwiegend der Farbton, die Löslichkeitsverhältnisse und sonstige coloristische Eigenschaften (Echtheiten) von technischer Bedeutung sind. Man erhält im allgemeinen ein Azo/Azoxy-Farbstoffgemisch, dessen Zusammensetzung durch die Bedingungen der Zusammenreduktion verändert werden kann.

Natürlich kann auch zunächst von den ungekupferten Alkoxy-Verbindungen von A oder B ausgegangen werden und zum Schluß nach erfolgter Zusammenreduktion die Kupferung in üblicher Weise vorgenommen werden.

Die Nitroazokupferkomplex-Verbindungen A bzw. B werden beispielsweise erhalten durch Kuppeln der diazotierten 5-Nitro-2-amino-alkoxybenzole der Formel

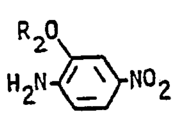

$R_2$ = $C_1$-$C_3$-Alkyl
mit Naphthalinsulfonsäuren der Formel

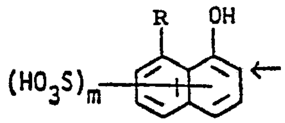

bzw.

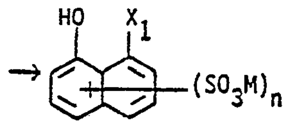

in 2-Stellung des Naphthalinkerns in üblicher Weise bzw. in alkalischem Medium unter Verwendung von Li-, Na-, K- oder Ammonium-Basen und anschließende entalkylierende Kupferung nach bekannten, beschriebenen Methoden.

Die Herstellung konzentrierter Farbstoff-Lösungen erfolgt in bekannter Weise beispielsweise durch Auflösen der Farbstoffsäure bzw. eines geeigneten (Alkali- bzw. Ammonium-) Salzes im gewünschten Lösungsmittel vorzugsweise Wasser oder Gemischen aus Wasser und wassermischbaren Lösungsmitteln insbesondere Alkohole, Ether und Ester sowie Amide oder durch Zusammenreduktion der Nitroazoverbindungen direkt zur Lösung.

Die Farbstoffe eignen sich gut zum Färben von geleimtem und ungeleimtem Papier. Möglich ist auch eine Nachbehandlung mit kationenaktiven Hilfsmitteln (wie Levogenen$^{(R)}$).

Die Farbstoffe besitzen ein gutes Ziehvermögen und gute allgemeine Echtheiten. Hervorzuheben ist die Brillanz der Färbungen und die Lichtechtheit.

Die Farbstoffe sind zum Teil bekannt, beispielsweise aus der GB-A-425 367. Dort ist deren Verwendung zum Färben von Baumwolle und regenerierter Cellulose beschrieben. Ein Hinweis auf die Eignung als Papierfarbstoff findet sich nicht.

In der älteren EP-A2-43 792 (Priorität : 03.06.80 ; Veröffentlichungstag : 13.01.82) mit den Vertragsstaaten CH, DE, FR, GB, LI und SE werden entsprechende Farbstoffe mit R, R', $X_1$, $X_2$ = H, Hydroxy oder Amino zum Färben von Papier beschrieben.

Für den Vertragsstaat IT für die vorliegende Anmeldung gilt der Anspruchssatz II, für die Vertragsstaaten CH, DE, FR, GB, LI der Anspruchssatz I.

Beispiel 1

Ein aus gebleichtem Sulfitzellstoff bestehender Trockenstoff wird im Pulper mit Wasser angeschlagen und bis zum Mahlgrad 35° Schoppler-Riegler gemahlen, so daß der Trockengehalt etwas über 2,5 % liegt und anschließend mit Wasser auf 2,5 % Trockengehalt des Dickstoffs eingestellt.

200 Teile dieses Dickstoffs werden mit 10 ml 0,5 %iger wässriger Lösung des Farbstoffs der Formel

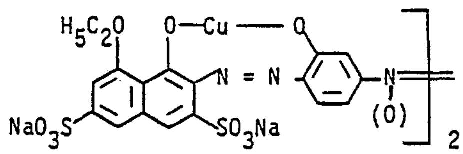

versetzt, ca. 5 Minuten verrührt, dann werden 2 % Harzleim und 3 % Alaun (bezogen auf Trockenstoff) zugegeben und wiederum einige Minuten homogen verrührt. Man verdünnt dann die Masse mit Wasser und stellt hieraus in üblicher Weise durch Absaugen über einen Blattbildner Papierblätter her, die bei 100 °C getrocknet werden. Die Papierblätter weisen eine blaue Färbung auf.

Gegebenenfalls kann Papiermasse auch ohne Harzleim unter sonst gleichen Färbebedingungen gefärbt werden. Man erhält ein blaugefärbtes Papierblatt.

Verwendet man anstelle obigen Farbstoffs Farbstoffe bzw. Farbstoff-Lösungen, die in den nachfolgenden beispielen beschrieben werden, so erhält man Papierfärbungen, deren Nuancen bei den einzelnen Farbstoffen angegeben sind.

Beispiel 2

Der im Beispiel 1 verwendete Farbstoff wird folgendermaßen hergestellt :

16,8 Teile (0,1 Mol) 5-Nitro-2-aminoanisol werden in üblicher Weise in wässrig-salzsäurer Suspension mit Natriumnitrit-Lösung bei 10 bis 15 °C diazotiert. Das Diazoniumsalz wird mit der Mischung von 34,8 Teilen (0,1 Mol) 1-Hydroxy-8-ethoxynaphthalin-3,6-disulfonsäure (Kupplungskomponente) in 250 Teilen Wasser und 120 Teilen 20 %iger Sodalösung vereinigt und bei Raumtemperatur ausgekuppelt.

Zur entmethylierenden Kupferung wird der Ansatz auf 90° erwärmt und mit der Lösung aus 27 Teilen krist. Kupfersulfat, 120 Teilen Wasser und 75 Teilen 25 %iger wässrigem Ammoniak versetzt und solange bei Kochtemperatur gehalten, bis die Kupferung beendet ist (ca. 10 Stunden) gegebenenfalls wird etwas wässriges Ammoniak nachgesetzt. Die ausgefallene gekupferte Nitrazoverbindung (A) wird isoliert.

Zur natronalkalischen Zusammenreduktion wird die erhaltene Paste in 650 Teilen Wasser verrührt, auf 70 °C erwärmt, 70 Teile 40 %ige wässrige Natronlauge zugegeben und bei 65 bis 70 °C mit einer wässrigen Lösung von 14 Teilen Glucose in 140 Teilen heißem Wasser versetzt. Die Reaktion verläuft

exotherm mit einem Temperaturanstieg bis etwa 80 °C. Nach beendeter Zusammenreduktion wird der gebildete Farbstoff in üblicher Weise, beispielsweise durch Aussalzen mit Natriumchlorid, isoliert und getrocknet.

Der getrocknete Farbstoff stellt ein dunkles Pulver dar, das sich in Wasser mit blauer Farbe löst und Papier — wie beschrieben — blau färbt.

Verwendet man als Kupplungskomponente anstelle von 1-Hydroxy-8-ethoxynaphthalin-3.6-disulfonsaüre 1.8-Dihydroxynaphthalin-3.6-disulfonsäure, so erhält man zunächst die Cu-Nitroazoverbindung (B), die nach der Zusammenreduktion einen Farbstoff liefert, der Papier in blauen Tönen färbt.

Führt man die Zusammenreduktion mit 0,05 Mol der gekupferten Nitrazoverbindung (A) und 0,05 Mol der gekupferten Nitrazoverbindung (B) wie oben angegeben durch, so erhält man einen Papier blau färbenden Farbstoff. Selbstverständlich kann das Verhältnis der gekupferten Nitrazoverbindungen nicht nur 1 : 1 sein, sondern beispielsweise von 1 : 10 bis 10 : 1 variieren. Erhalten werden blaue Papierfarbstoffe.

Verwendet man 0,05 Mol der gekupferten Nitroazoverbindung (A) oder (B) und 0,05 Mol der folgenden Tabelle entsprechende gekupferte Nitroazoverbindungen — angegeben werden die Kupplungskomponenten — so erhält man nach Zusammenreduktion Papierfarbstoffe mit der in der Tabelle angegebenen Nuance.

| Kupplungskomponente | Farbton |
|---|---|
| 1-Hydroxy-naphthalin-3.6-disulfonsäure | rotst. Blau |
| 1-Hydroxy-naphthalin-4-sulfonsäure | Blauviolett |
| 1-Hydroxy-naphthalin-5-sulfonsäure | Blauviolett |

Eine konzentrierte Farbstoff-Lösung des 1-Hydroxy-8-ethoxynaphthalin-3.6-disulfonsäure-Farbstoffs, hergestellt nach oben angegebenem Verfahren, erhält man beispielsweise folgendermaßen :

Der durch Zusammenreduktion erhaltene Farbstoff wird bei pH 4 in üblicher Weise isoliert. Die erhaltene Farbstoffpaste rührt man in 50 %ige wässrige Harnstoff-Lösung ein und filtriert nach vollständiger Lösung geringfügige (vzw. mechanische) Verunreinigungen ab.

**Ansprüche** (für die Vertragsstaaten : CH, DE, FR, GB, LI)

1. Verwendung von Farbstoffen der Formel

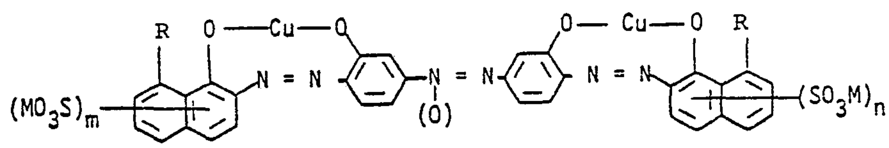

worin
R = gegebenenfalls substituiertes Alkoxy,
M = Wasserstoff oder Kation,
m, n = 1 oder 2 bedeuten,
zum Färben von Papier.

2. Verwendung von Farbstoffen der Formel

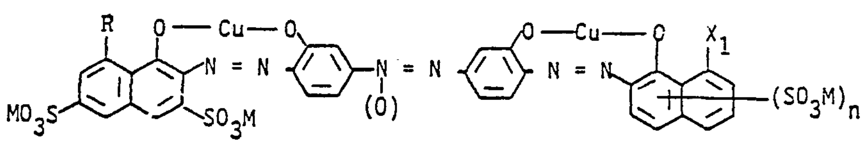

worin
R = gegebenenfalls substituiertes Alkoxy insbesondere gegebenenfalls substituiertes $C_1$-$C_4$ Alkoxy und
$X_1$ = Wasserstoff, Hydroxy, gegebenenfalls substituiertes Alkoxy und
M und n die in Anspruch 1 angegebene Bedeutung haben,
zum Färben von Papier.

3. Verwendung von Farbstoffen nach Anspruch 2, dadurch gekennzeichnet, daß die Farbstoffe der Formel

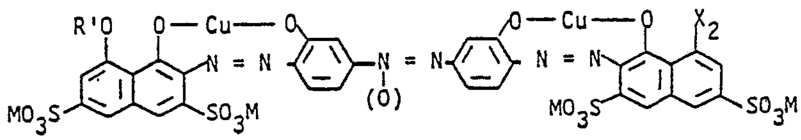

worin
R' = gegebenenfalls substituiertes $C_1$-$C_4$-Alkyl
$X_2$ = Hydroxy oder gegebenenfalls substituiertes Alkoxy
M = Wasserstoff oder Kation
bedeuten, entsprechen.

4. Mit den Farbstoffen der Ansprüche 1-3 gefärbtes Papier.

**Ansprüche** (für den Vertragsstaat IT)

1. Verwendung von Farbstoffen der Formel

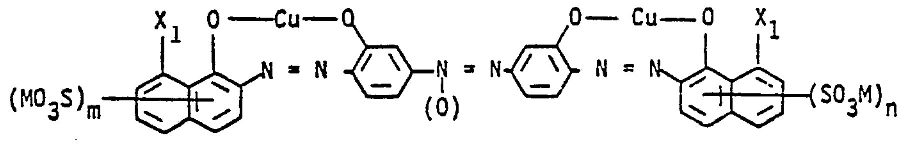

worin
$X_1$ = unabhängig voneinander Wasserstoff, Hydroxy, gegebenenfalls substituiertes Alkoxy,
M = Wasserstoff oder Kation,
m, n = 1 oder 2 bedeuten,
zum Färben von Papier.

2. Verwendung von Farbstoffen nach Anspruch 1, dadurch gekennzeichnet, daß die Farbstoffe der Formel

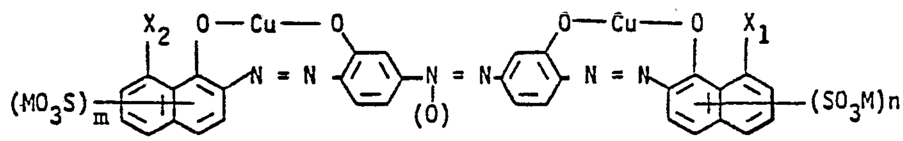

worin
$X_2$ = Hydroxy oder gegebenenfalls substituiertes Alkoxy bedeutet und
$X_1$, M, m und n die in Anspruch 1 angegebene Bedeutung haben,
entsprechen.

3. Verwendung von Farbstoffen nach Anspruch 2, dadurch gekennzeichnet, daß die Farbstoffe der Formel

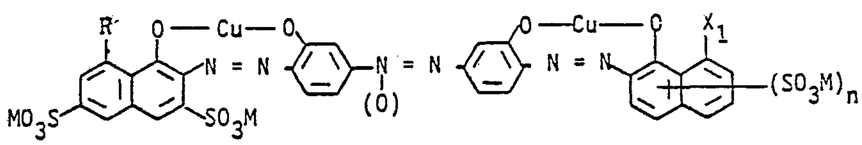

worin
R = gegebenenfalls substituiertes Alkoxy bedeutet und
$X_1$, M und n die in Anspruch 1 angegebene Bedeutung haben,
entsprechen.

4. Verwendung von Farbstoffen nach Anspruch 2, dadurch gekennzeichnet, daß die Farbstoffe der Formel

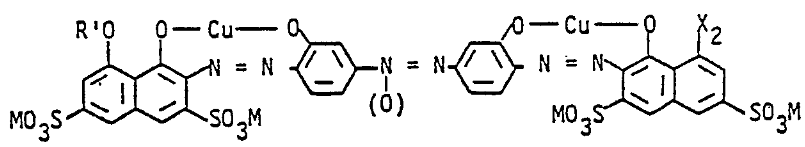

worin
R' = gegebenenfalls substituiertes $C_1$-$C_4$-Alkyl bedeutet und
$X_2$ und M die in Anspruch 2 angegebene Bedeutung haben,
entsprechen.

5. Mit den Farbstoffen der Ansprüche 1-4 gefärbtes Papier.

**Claims** (for the Contracting States : CH, DE, FR, GB, LI)

1. Use of dyestuffs of the formula

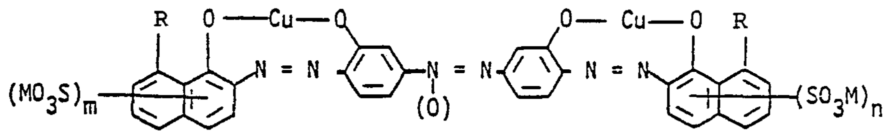

wherein
R denotes optionally substituted alkoxy,
M denotes hydrogen or a cation, and
m and n denote 1 or 2,
for dyeing paper.

2. Use of dyestuffs of the formula

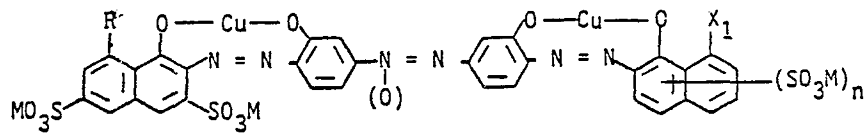

wherein
R = optionally substituted alkoxy, in particular optionally substituted $C_1$-$C_4$-alkoxy, and
$X_1$ = hydrogen, hydroxyl or optionally substituted alkoxy, and
M and n have the meaning given in Claim 1,
for dyeing paper.

3. Use of dyestuffs according to Claim 2, characterised in that the dyestuffs correspond to the formula

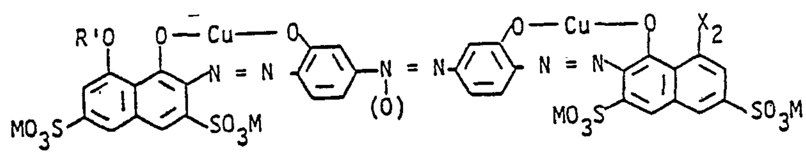

wherein
R' denotes optionally substituted $C_1$-$C_4$-alkyl,
$X_2$ denotes hydroxyl or optionally substituted alkoxy, and
M denotes hydrogen or a cation.

4. Paper dyed with the dyestuffs of Claims 1-3.

**Claims** (for the Contracting State IT)

1. Use of dyestuffs of the formula

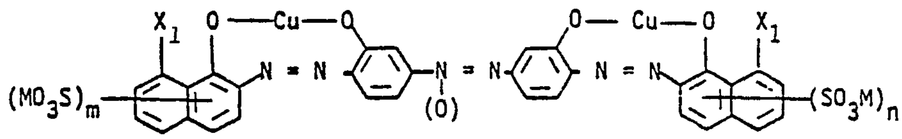

wherein
each $X_1$ independently denotes hydrogen, hydroxyl, or optionally substituted alkoxy,
M denotes hydrogen or a cation, and
m and n denote 1 or 2,
for dyeing paper.

2. Use of dyestuffs according to Claim 1, characterised in that the dyestuffs correspond to the formula

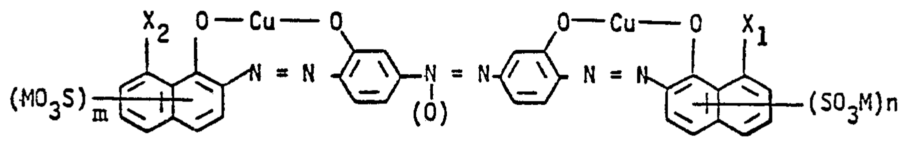

wherein

$X_2$ denotes hydroxyl or optionally substituted alkoxy and

$X_1$, M, m and n have the meaning given in Claim 1.

3. Use of dyestuffs according to Claim 2, characterised in that the dyestuffs correspond to the formula

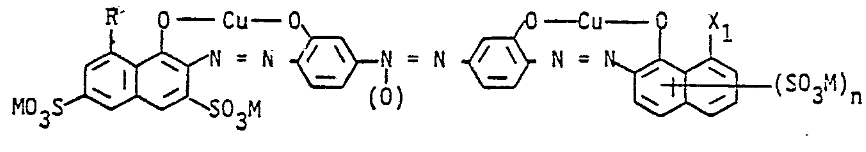

wherein

R denotes optionally substituted alkoxy and

$X_1$, M and n have the meaning given in Claim 1.

4. Use of dyestuffs according to Claim 2, characterised in that the dyestuffs correspond to the formula

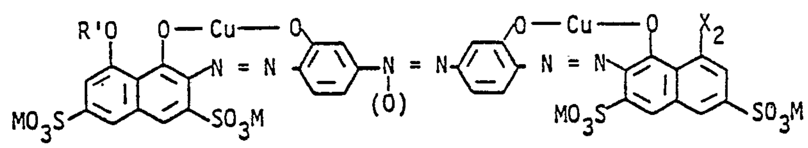

wherein

R' denotes optionally substituted $C_1$-$C_4$-alkyl and

$X_2$ and M have the meaning given in Claim 2.

5. Paper dyed with the dyestuffs of Claims 1-4.

**Revendications** (pour les Etats contractants CH, DE, FR, GB, LI)

1. Utilisation des colorants de formule

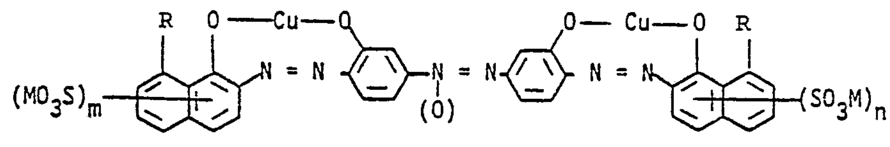

dans laquelle

R représente un groupe alcoxy éventuellement substitué,

M représente l'hydrogène ou un cation,

m et n sont égaux à 1 ou 2,

pour la coloration du papier.

2. Utilisation des colorants de formule

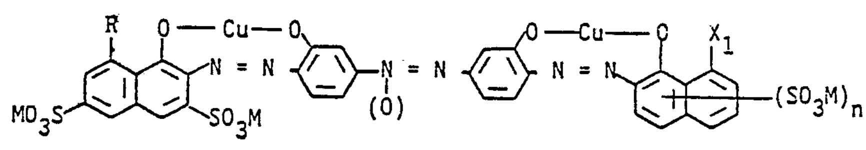

dans laquelle

R représente un groupe alcoxy éventuellement substitué, en particulier un groupe alcoxy en $C_1$-$C_4$ éventuellement substitué et

$X_1$ représente l'hydrogène, un groupe hydroxy, alcoxy éventuellement substitué, et

m et n ont les significations indiquées dans la revendication 1,

pour la coloration du papier.

3. Utilisation des colorants selon la revendication 2, caractérisée en ce que les colorants répondent à la formule

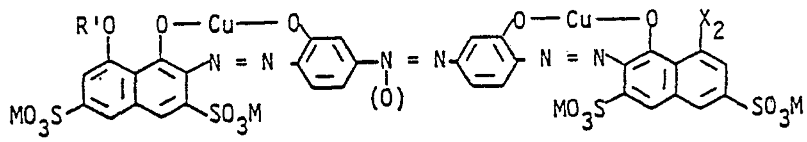

dans laquelle

R' représente un groupe alkyle en $C_1$-$C_4$ éventuellement substitué,

$X_2$ représente un groupe hydroxy ou alcoxy éventuellement substitué,

M représente l'hydrogène ou un cation.

4. Le papier coloré par les colorants des revendications 1 à 3.

**Revendications** (pour l'Etat contractant IT)

1. Utilisation des colorants de formule

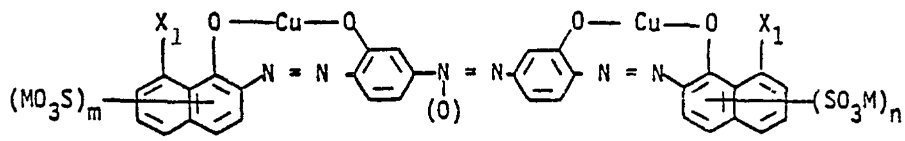

dans laquelle

$X_1$ représente indépendamment l'un de l'autre l'hydrogène, un groupe hydroxy, un groupe alcoxy, m et n sont égaux à 1 ou 2,

M représente l'hydrogène ou un cation,

pour la coloration du papier.

2. Utilisation des colorants de formule

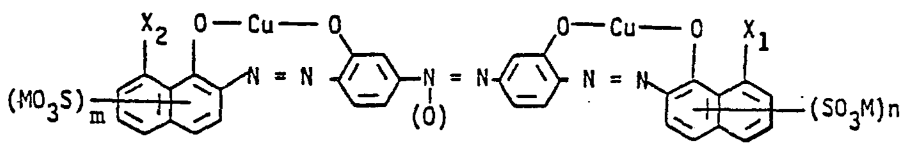

dans laquelle

$X_2$ représente un groupe hydroxy ou alcoxy et

$X_1$, M, m et n ont les significations indiquées dans la revendication 1,

pour la coloration du papier.

3. Utilisation des colorants de formule

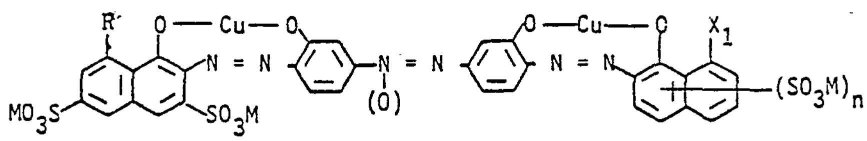

dans laquelle

R représente un groupe alcoxy et

$X_1$, M, m et n ont les significations indiquées dans la revendication 1

pour la coloration du papier.

4. Utilisation des colorants de formule

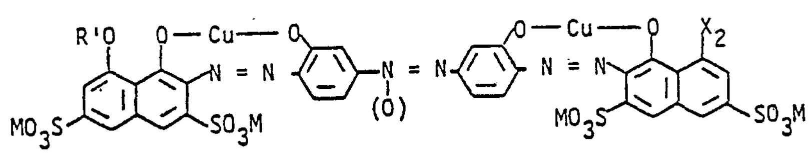

dans laquelle

R' représente un groupe alkyle en $C_1$-$C_4$, et

M et $X_2$ ont les significations indiquées dans la revendication 2,

pour la coloration du papier.

5. Le papier coloré par les colorants des revendications 1 à 4.